# EUROPÄISCHE PATENTANMELDUNG

(11) **EP 2 154 386 A1**
(43) Veröffentlichungstag der Anmeldung: **17.02.2010**
(21) Anmeldenummer: 08014309.2
(22) Anmeldetag: 11.08.2008
(51) Int. Cl.: F16C 32/04, F16C 35/00, F04D 29/058

(54) **Lagerbock mit einem geteilten magnetischen Radiallager und einem geteilten Fanglager in einem gemeinsamen geteilten Lagergehäuse**

(71) Anmelder: Siemens Aktiengesellschaft, 80333 München (DE)
(72) Erfinder: Stoiber, Dietmar, 90763 Fürth (DE); Walter, Hartmut, 10961 Berlin (DE)

(57) **Zusammenfassung**

Ein Lagerbock (1) weist ein magnetisches Radiallager (4) zur Lagerung einer Rotorwelle (7) einer rotierenden Maschine (10) und ein Fanglager (5) zum Auffangen der Rotorwelle (7) auf. Das magnetische Radiallager (4) und das Fanglager (5) sind in einem gemeinsamen Lagergehäuse (2) des Lagerbocks (1) axial benachbart aufgenommen. Das Lagergehäuse (2) ist in Bezug auf eine Stirnseite (S) der rotierenden Maschine (10) axial außenliegend angeordnet. Erfindungsgemäß sind das Lagergehäuse (2) und die beiden aufgenommenen Lager (4,5) an einer konstruktiven, axial verlaufenden Schnittebene (E) teilbar ausgebildet. Die Schnittebene (E) des Lagergehäuses (2) fällt im Wesentlichen mit einer durch die Drehachse (A) der gelagerten Rotorwelle (7) hindurchgehenden Ebene zusammen.

## Beschreibung

Lagerbock mit einem magnetischen Radiallager und einem Fanglager zur Lagerung und zum Auffangen einer Rotorwelle einer rotierenden Maschine

Die Erfindung betrifft einen Lagerbock, welcher ein magnetisches Radiallager zur Lagerung einer Rotorwelle einer rotierenden Maschine und ein Fanglager zum Auffangen der Rotorwelle aufweist. Das magnetische Radiallager und das Fanglager sind in einem gemeinsamen Lagergehäuse des Lagerbocks axial benachbart aufgenommen. Das Lagergehäuse ist in Bezug auf eine Stirnseite der rotierenden Maschine axial außenliegend angeordnet.

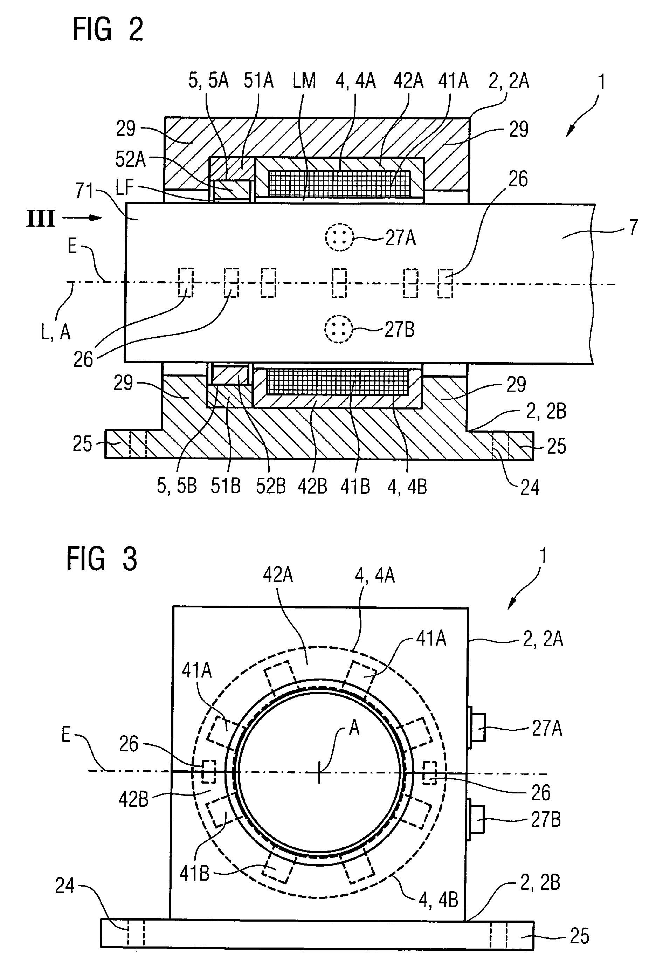

In der deutschen Patentschrift DE 43 34 662 C2 ist eine Maschine mit einer Welle beschrieben, welche in einem Maschinengehäuse mittels wenigstens zwei als Radiallager ausgebildeten Magnetlagern um eine zentrale Drehachse drehbar gelagert ist. Jedes der in einem axialen Abstand voneinander angeordneten Magnetlager weist Elektromagnete auf, welche im Maschinengehäuse in Umfangrichtung im Abstand voneinander rings um die Welle angeordnet sind. Die Elektromagnete weisen selektiv mit Erregerströmen speisbare Spulenanordnungen auf, um die Welle im Maschinengehäuse in radialer Richtung zu lagern. Das Maschinengehäuse weist zwei Gehäuseteile auf, die in einer Ebene, welche mit einer die Wellenachse enthaltenden Ebene im Wesentlichen zusammenfällt, passend aneinandergefügt und durch lösbare Verbindungsvorrichtungen aneinander befestigt sind. Es sind erste Gruppen der Elektromagnete beider Magnetlager in einem ersten und zweite Gruppen der Elektromagnete beider Magnetlager im zweiten der beiden Gehäuseteile angeordnet, sodass nach Lösen der Verbindungsvorrichtungen das eine Gehäuseteil samt den ersten Gruppen von Elektromagneten in einer Richtung und das andere Gehäuseteil samt den zweiten Gruppen von Elektromagneten in entgegengesetzter Richtung von der wegbewegbar ist. In einer Ausführungsform der dortigen Erfindung (siehe FIG. 3) sind mechanische Stützlager vorgesehen, um die Welle abzustützen, solange sie sich nicht dreht sowie während eines relativ kurzen Zeitintervalls von beispielsweise maximal 7 sec. für den Fall des Stromausfalls für die Magnete. Die mechanischen Stützlager werden durch stationäre Buchsen gebildet, welche in den Stirnwänden des Maschinengehäuses angebracht sind und der Abstützung der Endbereiche der Welle dienen.

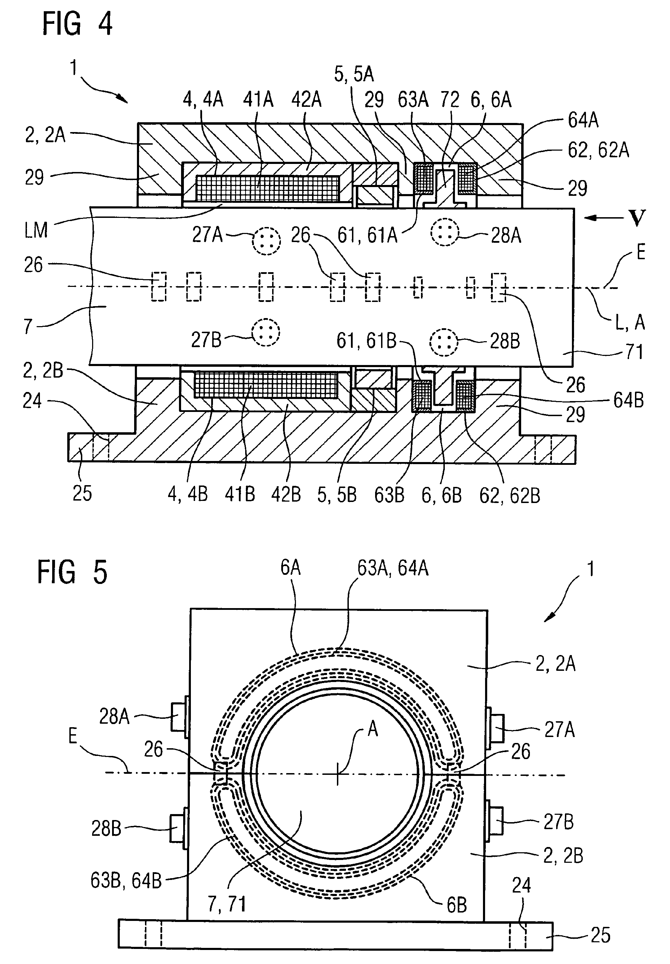

Aus der der US-Offenlegungsschrift US 2004/0240759 A1 ist ein Fanglager bekannt, welches an seiner radialen Innenseite beweglich gelagerte Segmente aufweist. Die Segmente sind gegenüber einem feststehenden Fanglageraußenring des Fanglagers mittels Federelemente radial vorgespannt und mit dem Lageraußenring in tangentialer Richtung fixiert. Die Segmente weisen an ihrer radialen Innenseite eine Gleitlagerschicht auf. Bei Ausfall eines betriebsmäßigen Magnetlagers fällt eine durch das Fanglager geführte Rotorwelle in das Fanglager. Mechanische radiale Schwingungen der Rotorwelle werden durch die radial vorgespannten Segmente ausgeglichen. Bei einer dortigen Ausführungsform (siehe FIG. 5a, Absatz [0071]) weist ein radial außenliegendes Lagergehäuse eine obere und eine untere halbkreisförmige Lagerschale auf.

Bei den rotierenden Maschinen handelt es sich vorzugsweise um Turbomaschinen, wie z.B. um Turbogeneratoren, Turbomotoren oder Turbokompressoren. Die maximale betriebliche Drehzahl derartiger Maschinen liegt üblicherweise bei mehr als 4000 min⁻¹ auf. Sie weisen typischerweise eine Leistung von 1000 kW und mehr auf. Im Falle eines Turbokompressors treibt eine Elektromotoreinheit eine Turbineneinheit an. Die Welle der Elektromotoreinheit und die Turbinenwelle sind vorzugsweise fluchtend angeordnet. Beide Wellen können über ein Kupplungselement miteinander verbunden sein.

Bei den bekannten Maschinen werden häufig Gleitlager zur Lagerung verwendet. Um die Maschine in einem Service- oder Montagefall leichter demontieren zu können, werden diese teilbar ausgeführt. In einem solchen Fall kann die obere, schalenförmige Hälfte des Gleitlagers abgenommen werden, sodass die Rotorwelle nach oben aus dem Lagerbock entnommen werden kann. Bei einem Defekt eines solchen Gleitlagers können beide Lagerhälften von der Rotorwelle entfernt werden, ohne dass der restliche Wellenstrang demontiert werden muss.

Anstelle von Gleitlagern werden zunehmend aktive magnetische Radiallager verwendet. Dabei wird die Tragkraft durch geregelte Elektromagneten erzeugt. Bei Ausfall der Regelung fällt die Rotorwelle, beziehungsweise ein Rotorwellenende, in ein Fanglager, das für begrenzte Zeit die Notlaufeigenschaften der rotierenden Maschinen zur Verfügung stellt. Die beiden Lager bilden üblicherweise eine mechanische Einheit, die in einem gemeinsamen Lagerbock aufgenommen ist. Allerdings ist dann in einem Wartungsfall der komplette Wellenstrang zu zerlegen, um beide Lager axial von der Rotorwelle abziehen zu können. Dies ist sehr aufwändig und teuer.

Ausgehend von dem eingangs genannten Stand der Technik ist es eine Aufgabe der vorliegenden Erfindung, einen Lagerbock für eine rotierende Maschine anzugeben, welcher wartungs- und montagefreundlicher ist.

Die Aufgabe der Erfindung wird durch einen Lagerbock mit den Merkmalen des Patentanspruchs 1 gelöst. In den abhängigen Ansprüchen 2 bis 10 sind vorteilhafte Ausführungsformen des Lagerbocks angegeben.

Erfindungsgemäß sind das Lagergehäuse und die beiden aufgenommenen Lager an einer konstruktiven, axial verlaufenden Schnittebene teilbar ausgebildet. Die Schnittebene des Lagergehäuses fällt im Wesentlichen mit einer durch die Drehachse der gelagerten Rotorwelle hindurchgehenden Ebene zusammen. Dadurch kann vorteilhaft ein Teil des Lagergehäuses, insbesondere eine obere Schale des Lagergehäuses, vom restlichen Lagergehäuse abgenommen werden, und die Rotorwelle ohne Zerlegung des gesamten Wellenstrangs aus dem Lagerbock herausgenommen werden. Der Zeit- und Kostenaufwand reduzieren sich in einem Service- oder Wartungsfall erheblich.

Nach einer Ausführungsform ist das Lagergehäuse in eine erste und zweite Lagergehäusehälfte teilbar. Es sind beide Lagergehäusehälften mittels lösbarer Verbindungselemente, insbesondere mittels Schraubverbindungen, fest miteinander verbindbar. Durch diese mechanisch feste Verbindung wird sichergestellt, dass durch das Auffangen der Rotorwelle im Fanglager keine mechanischen Verformungen im Gehäuse entstehen. Vorteilhaft ist eine besonders steife und hochfeste Ausführung des Lagerbocks, insbesondere des Lagergehäuses, um die engen Luftspalte zwischen dem Magnetlager und der Rotorwelle bzw. zwischen dem Fanglager und der Rotorwelle, möglichst genau einzuhalten. Hier führen bereits geringfügige geometrische Abweichungen zwischen der konstruktiven Lagerungsachse des Magnetlagers und der Drehachse der rotierenden Maschine zu einem stark erhöhten Regelungsaufwand und folglich zu einer stark erhöhten Stromaufnahme des magnetischen Lagers.

Nach einer Ausführungsform des Lagerbocks ist das Lagergehäuse in eine erste und zweite Lagergehäusehälfte teilbar. Eine erste und zweite Radiallagerhälfte sowie eine erste und zweite Fanglagerhälfte sind in der ersten bzw. zweiten Lagergehäusehälfte aufgenommen. Die jeweiligen Lagerhälften sind beim Zusammenfügen der beiden Lagergehäusehälften mittels formschlüssiger Verbindungselemente automatisch zu dem Radiallager und dem Fanglager passend zusammenfügbar. Mit formschlüssigen Verbindungselementen sind insbesondere zumindest nahezu spielfreie Verbindungselemente, wie zylindrische Bolzen und geometrisch darauf abgestimmte Bohrungen, gemeint. Vorzugsweise sind die Verbindungselemente in der Schnittebene der beiden Lagergehäusehälften sowie in Bauteilen des magnetischen Radiallagers und des Fanglagers eingebracht. Insbesondere sind diese in Normalenrichtung zur Schnittebene ausgerichtet. Vorzugsweise sind in dieser Schnittebene mehrere Bolzen verteilt angeordnet, welche dann in entsprechenden, beim Zusammenbau gegenüberliegenden Bohrungen zumindest nahezu spielfrei aufnehmbar sind.

Nach einer weiteren Ausführungsform weist das magnetische Radiallager eine erste Gruppe von Elektromagneten und eine zweite Gruppe von Elektromagneten auf. Die erste Gruppe ist Teil der ersten Radiallagerhälfte und die zweite Gruppe ist Teil der zweiten Radiallagerhälfte. Beide Gruppen sind über jeweils aus den Lagergehäusehälften herausgeführte elektrische Zuleitungen mit einem selektiven Erregerstrom speisbar. Die Aufteilung der in Umfangrichtung im Abstand voneinander rings um die Rotorwelle angeordneten Elektromagnete des magnetischen Radiallagers erfolgt in der Weise, dass kein Spulenkörper der Elektromagnete durch die konstruktive Schnittebene "geteilt" wird. Mit anderen Worten erfolgt der konstruktive Schnitt im magnetischen Ringkern des Radiallagers.

Vorzugsweise ist an der ersten und zweiten Lagergehäusehälfte, insbesondere an deren Außenseite, jeweils ein elektrischer Anschluss, insbesondere eine Buchse, zum Einspeisen des jeweiligen Erregerstroms für das magnetische Radiallager angeordnet. Über die beiden Buchsen kann dann das Radiallager an eine entsprechende Regelungseinheit angeschlossen werden.

Nach einer besonderen Ausführungsform weist der Lagerbock ein im Lagergehäuse aufgenommenes, axial zum magnetischen Radiallager und zum Fanglager angeordnetes magnetisches Axiallager auf. Letzteres ist an derselben konstruktiven Schnittebene teilbar ausgebildet. Es sind eine erste und zweite magnetische Axiallagerhälfte der ersten bzw. der zweiten Lagergehäusehälfte aufgenommen. Die Axiallagerhälften sind derart axial im Lagergehäuse angeordnet, dass diese einer fest mit der Rotorwelle verbundenen, radial abstehenden Scheibe axial gegenüberliegen. Die Scheibe besteht aus einem magnetischen Werkstoff. Die jeweiligen Lagerhälften sind beim Zusammenfügen der beiden Lagergehäusehälften mittels der formschlüssigen Verbindungselemente automatisch zum magnetischen Radiallager, zum Fanglager und zum magnetischen Axiallager passend zusammenfügbar. Das magnetische Axiallager ermöglicht im Zusammenspiel mit der Scheibe vorteilhaft eine berührungslos arbeitende, axiale Fixierung der Rotorwelle.

Nach einer Ausführungsform des magnetischen Axiallagers weist die erste und zweite magnetische Axiallagerhälfte jeweils zwei sich axial gegenüberliegende Gruppen von Elektromagneten auf. Die jeweiligen Gruppen sind derart axial zueinander beabstandet, dass die fest mit der Rotorwelle verbundene, radial abstehende Scheibe berührungslos dazwischen liegt. Durch diese Anordnung kann die Rotorwelle über die Scheibe in beiden Axialrichtungen fixiert werden.

Nach einer Ausführungsform sind die erste und zweite magnetische Axiallagerhälfte über jeweils aus den Lagergehäusehälften herausgeführte elektrische Zuleitungen mit jeweils einem weiteren selektiven Erregerstrom speisbar.

Nach einer weiteren Ausführungsform kann, analog zu den Buchsen bei dem magnetischen Radiallager, an der ersten und zweiten Lagergehäusehälfte, insbesondere an deren Außenseite, jeweils ein weiterer elektrischer Anschluss, insbesondere eine Buchse, zum Einspeisen des jeweiligen Erregerstroms für das magnetische Axiallager angeordnet sein.

Einer weiteren Ausführungsform zufolge ist der Lagerbock mit dem magnetischen Radiallager und dem Fanglager zur berührungslosen radialen Lagerung und zum Auffangen der Rotorwelle bis zu einer Achslast im Bereich von 3 t bis 5 t ausgelegt. In besonderen Fällen kann der Lagerbock auch für höhere Achslasten ausgelegt sein, wie z.B. für 7 t, 10 t oder mehr.

Die Erfindung sowie vorteilhafte Ausführungen der Erfindung werden im Weiteren anhand der nachfolgenden Figuren näher beschrieben. Es zeigen
- FIG 1: beispielhaft einen Turbokompressor mit zwei axial außenliegenden, gemäß der Erfindung geteilt ausge- führten Lagerböcken zur Lagerung einer Rotorwelle des Turbokompressors,
- FIG 2: einen senkrechten Schnitt durch eine Lagerungsachse des linken Lagerbocks gemäß FIG 1,
- FIG 3: eine axiale Ansicht auf den linken Lagerbock gemäß der in FIG 2 eingetragenen Blickrichtung III,
- FIG 4: einen senkrechten Schnitt durch eine Lagerungsachse des rechten Lagerbocks gemäß FIG 1 und
- FIG 5: eine axiale Ansicht auf den rechten Lagerbock gemäß der in FIG 4 eingetragenen Blickrichtung V.

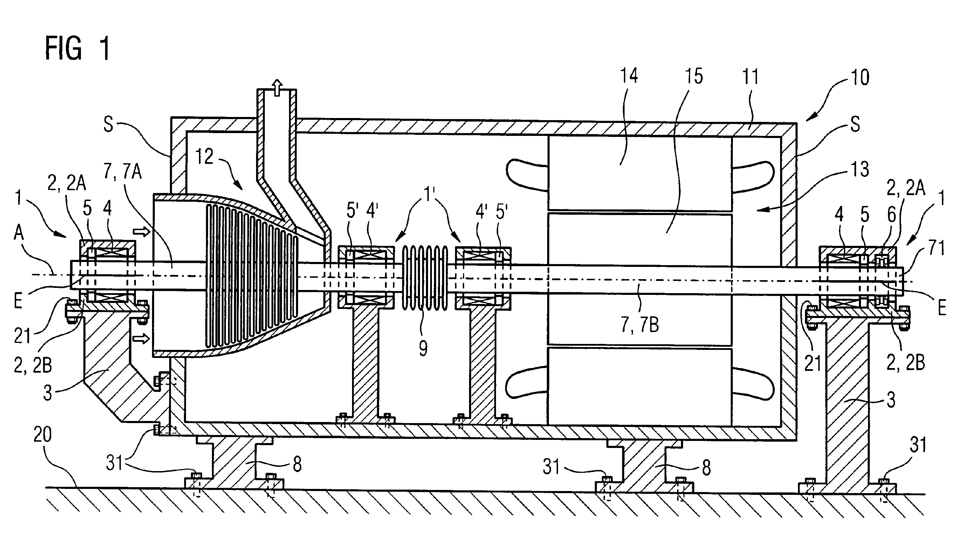

FIG 1 zeigt beispielhaft einen Turbokompressor 10 als Beispiel einer rotierenden Maschine. Er weist zwei axial außenliegende, gemäß der Erfindung geteilt ausgeführte Lagerböcke 1 zur Lagerung einer Rotorwelle 7 des Turbokompressors 10 auf. Die Lagerböcke 1 sind in Bezug auf eine axiale Stirnseite S des Turbokompressors 10 axial außenliegend angeordnet. Die Stirnseite S ist üblicherweise Teil eines Maschinengehäuses 11 der rotierenden Maschine 10. Im Maschinengehäuse 11 sind eine Turbineneinheit 12 und eine Elektromotoreinheit 13 zum Antreiben der Turbineneinheit 12 aufgenommen. Beide Einheiten 12, 13 weisen eine geteilt ausgeführte Rotorwelle 7 auf, die aus einer Turbinenwelle 7A und aus einer mit dieser fluchtenden Motorwelle 7B gebildet ist. Zwischen Turbinenwelle 7A und Motorwelle 7B ist eine Wellenkupplung 9 angeordnet. Weiterhin sind die in der rotierenden Maschine 10 liegenden Enden der Turbinen- und Motorwelle 7A, 7B jeweils in einem nicht geteilt ausgeführten Lagerbock 1' gelagert, das heißt die innenliegenden Lagerböcke 1' weisen ein nicht geteilt ausgeführtes Magnet- und Fanglager 4', 5' auf. Alternativ kann die Rotorwelle 7 kupplungslos ausgeführt sein. Mit dem Bezugszeichen 15 ist ein Rotorpaket und mit 14 ein Stator der Elektromotoreinheit 13 bezeichnet. Weiterhin sind am Maschinengehäuse 11 zwei Maschinenstützen 8 zur Befestigung des Turbokompressors 10 auf einem Fundament 20 angeordnet. Mit dem Bezugszeichen 31 sind entsprechende Befestigungsmittel in Form von Schrauben dargestellt.

Es ist ein linkes Wellenende 71 der Rotorwelle 7 im linken Lagerbock 1 aufgenommen, welcher zur kraftmäßigen Abstützung an der linken Stirnseite S des Turbokompressors 10 eine Lagerbockstütze 3 aufweist. Letztere ist über Befestigungsmittel 31 am Maschinengehäuse 11 angeflanscht. Im rechten Teil der FIG 1 ist ein rechtes Wellenende 71 im rechten Lagerbock 1 aufgenommen. Der dortige Lagerbock 1 weist eine weitere Lagerbockstütze 3 auf, welche direkt auf dem Fundament 20 befestigt ist. Wesentlich ist in diesem Zusammenhang, dass ein jeweiliges Lagergehäuse 2 der beiden Lagerböcke 1 räumlich getrennt von der rotierenden Maschine 10 bzw. vom gezeigten Turbokompressor axial außenliegend angeordnet ist.

Im jeweiligen Lagergehäuse 2 der Lagerböcke 1 sind axial benachbart ein magnetisches Radiallager 4 und ein Fanglager 5 angeordnet. Das magnetische Radiallager 4 ist zur betrieblichen radialen Lagerung der Rotorwelle 7 vorgesehen. Das Fanglager 5 ist zum Auffangen der Rotorwelle 7 vorgesehen, insbesondere bei einem Ausfall des magnetischen Radiallagers 4 sowie zum Absetzen der Rotorwelle 7 in einem Stillstand, wie z.B. in einem Wartungsfall. Mit "axial" sind Richtung parallel zu einer gemeinsamen konstruktiven Lagerungsachse L der beiden Lager 4, 5 bezeichnet. Die Lagerungsachse L stimmt bei ordnungsgemäßen magnetischer Lagerung faktisch mit der Drehachse A der Rotorwelle 7 überein.

Erfindungsgemäß sind das Lagergehäuse 2 und die beiden aufgenommenen Lager 4, 5 an einer konstruktive, axial verlaufenden Schnittebene E teilbar ausgebildet. Die Schnittebene E des Lagergehäuses 2 fällt im Wesentlichen mit einer durch die Drehachse A der gelagerten Rotorwelle 7 bzw. durch die Lagerungsachse L der beiden Lager 4, 5 hindurchgehenden Ebene zusammen.

Zur Verdeutlichung ist im Bereich der Teilung des Lagergehäuses 2 eine dick gezeichnete Linie in der konstruktiven Schnittebene E eingetragen. Das Lagergehäuse 2 weist durch die Teilung folglich eine erste Lagergehäusehälfte 2A und eine zweite Lagergehäusehälfte 2B auf. Die erste Lagergehäusehälfte 2A kann als Oberschale angesehen werden, die zweite Lagergehäusehälfte 2B als untere Lagerschale angesehen werden. Im Beispiel der vorliegenden FIG 1 ist die zweite Lagergehäusehälfte 2B in Richtung zum Fundament 20 hin in Form eines Flansches erweitert, sodass dort die geometrisch darauf abgestimmte Lagerbockstütze 3 mittels der Befestigungsschrauben 31 angebracht werden kann. Ergänzend wird darauf hingewiesen, dass die zweite Lagergehäusehälfte 2B und die Lagerbockstütze 3 auch ein gemeinsames Bauteil, wie z.B. ein Gussteil, bilden können.

FIG 2 zeigt einen senkrechten Schnitt durch eine Lagerungsachse L des linken Lagerbocks 1 gemäß FIG 1. Zugleich geht der Schnitt durch die Drehachse A der Rotorwelle 7 hindurch. Weiterhin ist zu sehen, dass die Drehachse A komplett in der konstruktiven Schnittebene E liegt. Vorzugsweise ist die Schnittebene E eine plane Fläche. Sie kann alternativ eine davon abweichende Flächenkontur aufweisen, wie z.B. gekrümmt oder gestuft. Wesentlich dabei ist, dass die durch die konstruktive Schnittebene E entstehenden Bauteile, das heißt die erste und zweite Lagergehäusehälfte 2A, 2B, eine erste und zweite magnetische Radiallagerhälfte 4A, 4B sowie eine gleichfalls geteilte erste und zweite Fanglagerhälfte 5A, 5B in radialer Richtung von der Rotorwelle 7 abgenommen werden können. Hierzu sind die beiden fest miteinander verbundenen Lagergehäusehälften 2A, 2B durch Lösen nicht weiter gezeigter lösbarer Befestigungsmittel zu lösen. In diesem Fall ist es vorteilhaft, wenn die Rotorwelle 7 beim Ausbau des Lagergehäuses im Endbereich mittels einer nicht weiter gezeigten Hilfsstütze fest gehalten wird.

Im Besonderen ist die erste Radiallagerhälfte 4A und die erste Fanglagerhälfte 5A fest in der zugehörigen ersten Lagergehäusehälfte 2A aufgenommen. Die Aufnahme kann z.B. mittels nicht weiter gezeigter weiterer Befestigungsmittel, insbesondere mittels Schrauben erfolgen. In entsprechender Weise ist die zweite Radiallagerhälfte 4B sowie die zweite Fanglagerhälfte 5B in der zweiten, das heißt in der unteren Lagergehäusehälfte 2B fest aufgenommen. Vorzugsweise sind die Lagergehäusehälften 2A, 2B in mechanischer Hinsicht massiv ausgeführt und geometrisch derart auf die Außenkonturen der Lagerhälften 4A, 4B, 5A, 5B abgestimmt, dass diese zumindest nahezu spielfrei in Aussparungen aufgenommen werden können, die durch im Lagergehäuse 2 vorhandene Ringstege 29 ausgespart sind. Weiterhin weisen die jeweiligen Lagerhälften 4A, 4B, 5A, 5B an der konstruktiven Schnittebene E jeweils gegenüberliegende, miteinander korrespondierende, formschlüssige Verbindungselemente 26 auf. Die Verbindungselemente 26 können sich z.B. aus Zylinderbohrungen in den Lagerhälften 4A, 4B, 5A, 5B und aus dazu korrespondierenden Zylinderbolzen zusammensetzen. Sie greifen dann beim Zusammenbau der Lagergehäusehälften 2A, 2B mit den dort aufgenommenen Lagerhälften 4A, 4B, 5A, 5B passend, insbesondere zumindest nahezu spielfrei ineinander. Wesentlich dabei ist, dass sämtliche aufgenommenen Lagerhälften 4A, 4B, 5A, 5B nach Zusammenbau des Lagergehäuses 2 spielfrei, formschlüssig und gegebenenfalls kraftschlüssig zu dem kompletten magnetischen Radiallager 4 und zu dem kompletten Fanglager 5 zusammengefügt werden.

Im Beispiel der FIG 2 weist das magnetische Radiallager 4 eine erste Gruppe von Elektromagneten 41A und eine zweite Gruppe von Elektromagneten 41B auf. Die erste Gruppe ist dabei Teil der ersten Radiallagerhälfte 4A. Die zweite Gruppe ist Teil der zweiten Radiallagerhälfte 4B. Beide Gruppen der Elektromagneten 41A, 41B sind über jeweils eine aus den jeweiligen Lagergehäusen 2A, 2B heraus geführte elektrische Zuleitung mit einem selektiven Erregerstrom speisbar. Die Zuleitung ist im Beispiel der FIG 2 selbst nicht dargestellt. Dagegen ist jeweils ein elektrischer Anschluss 27A, 27B in Form einer Buchse zum Einspeisen des jeweiligen Erregerstromes für das magnetische Radiallager 4 gestrichelt eingezeichnet. Weiterhin weist das gezeigte Fanglager 5 zwei geteilte Außenlagerringe 51A, 51B mit radial innenliegenden Reibbelägen 52A, 52B auf. Insbesondere ist das Fanglager 5 als Reiblager zum Auffangen der Rotorwelle 7 ausgebildet.

FIG 3 zeigt eine axiale Ansicht auf den linken Lagerbock 1 gemäß der in FIG 2 eingetragenen Blickrichtung III. In dieser Darstellung sind besonders die beispielhaft acht Spulenkörper bzw. Elektromagnete 41A, 41B des magnetischen Radiallagers 4 zu sehen. Sie sind in tangentialer Richtung in Bezug auf die Lagerungsachse L gleichmäßig verteilt und unter Ausbildung eines magnetischen Luftspaltes LM der Außenseite der Rotorwelle 7 gegenüberliegend angeordnet. Wesentlich ist hier, dass die Elektromagneten 41A, 41B nicht in der konstruktiven Schnittebene E liegen. Mit dem Bezugszeichen 42A, 42B sind die Magnetkernhälften des magnetischen Radiallagers 4 bezeichnet.

FIG 4 zeigt einen senkrechten Schnitt durch eine Lagerungsachse L des rechten Lagerbocks 1 gemäß FIG 1. Der Lagerbock 1 weist nun zusätzlich ein im Lagergehäuse 2 aufgenommenes axial zum magnetischen Radiallager 4 und zum Fanglager 5 angeordnetes magnetisches Axiallager 6 auf. Im vorliegenden Beispiel ist das Fanglager 5 axial zwischen den beiden magnetischen Lagern 4, 6 angeordnet. Es sind auch davon abweichende axiale Anordnungen möglich.

Das gezeigte magnetische Axiallager 6 ist dabei an derselben konstruktiven Schnittebene E teilbar ausgebildet. Es ist weiterhin eine erste und zweite magnetische Axiallagerhälfte 6A, 6B fest in der ersten bzw. zweiten Lagergehäusehälfte 2A, 2B aufgenommen. Weiterhin sind die beiden Axiallagerhälften 6A, 6B derart axial im Lagergehäuse 2 angeordnet, dass diese einer fest mit der Rotorwelle 7 verbundenen, radial abstehenden Scheibe 72 gegenüberliegen. Die gezeigte Scheibe 72 kann z.B. auf der gezeigten Rotorwelle 7 aufgeschrumpft sein. Sie kann zudem geteilt ausgeführt sein. Weiterhin sind die jeweiligen Lagerhälften 4A, 4B, 5A, 5B, 6A, 6B beim Zusammenfügen der beiden Lagergehäusehälften 2A, 2B mittels der formschlüssigen Verbindungselemente 26 automatisch zu dem magnetischen Radiallager 4, zu dem Fanglager 5 und zu dem magnetischen Axiallager 6 passend zusammenfügbar.

Im vorliegenden Beispiel weist die erste und zweite magnetische Axiallagerhälfte 6A, 6B jeweils zwei sich axial gegenüberliegende Gruppen von Elektromagneten 61A, 62A; 61B, 62B auf. Mit den Bezugszeichen 63A, 64A, 63B, 64B sind die Spulenkörper des magnetischen Axiallagers 6 bezeichnet.

Die jeweiligen Gruppen sind derart axial zueinander beabstandet, dass die fest mit der Rotorwelle 7 verbundene, radial abstehende Scheibe 72 berührungslos dazwischenliegt.

Dabei ist durch entsprechende Erregung des magnetischen Axiallagers 6 eine in beiden Richtungen axial wirkende Kraft über die Scheibe 72 auf die gesamte Rotorwelle 7 übertragbar.

Analog zum magnetischen Radiallager 4 sind die erste und zweite magnetische Axiallagerhälfte 6A, 6B jeweils über aus den jeweiligen Lagergehäusen 2A, 2B herausgeführte elektrische Zuleitungen mit jeweils einem weiteren selektiven Erregerstrom speisbar. Die zugehörigen Buchsen 28A, 28B sind gleichfalls gestrichelt eingetragen. An diesen Buchsen 28A, 28B kann ein entsprechendes Regelungsgerät für das magnetische Axiallager 6 angeschlossen werden.

FIG 5 zeigt eine Ansicht des erfindungsgemäßen Lagerbocks 1 entsprechend dem Beispiel in der FIG 4. In dieser Ansicht ist die "halbmondförmige" Spulenform der magnetischen Axiallagerhälften 6A, 6B zu sehen. Bei Stromerregung entsteht dadurch ein im Wesentlichen axial wirkendes Magnetfeld, welches eine im Wesentlichen axial wirkende mechanische Kraft auf die Scheibe 72 ausübt.

## Patentansprüche

1. Lagerbock mit einem magnetischen Radiallager (4) zur Lagerung einer Rotorwelle (7) einer rotierenden Maschine (10) und mit einem Fanglager (5) zum Auffangen der Rotorwelle (7), wobei das magnetische Radiallager (4) und das Fanglager (5) in einem gemeinsamen Lagergehäuse (2) des Lagerbocks axial benachbart aufgenommen sind und wobei das Lagergehäuse (2) in Bezug auf eine Stirnseite (S) der rotierenden Maschine (10) axial außenliegend angeordnet ist, **dadurch gekennzeichnet, dass** das Lagergehäuse (2) und die beiden aufgenommenen Lager (4,5) an einer konstruktiven, axial verlaufenden Schnittebene (E) teilbar ausgebildet sind, wobei die Schnittebene (E) des Lagergehäuses (2) im Wesentlichen mit einer durch die Drehachse (A) der gelagerten Rotorwelle (7) hindurchgehenden Ebene zusammenfällt.

2. Lagerbock nach Anspruch 1, **dadurch gekennzeichnet, dass** das Lagergehäuse (2) in eine erste und zweite Lagergehäusehälfte (2A,2B) teilbar ist und dass beide Lagergehäusehälften (2A,2B) mittels lösbarer Verbindungselemente, insbesondere mittels Schraubverbindungen, fest miteinander verbindbar sind.

3. Lagerbock nach Anspruch 1 oder 2, **dadurch gekennzeichnet, dass** das Lagergehäuse (2) in eine erste und zweite Lagergehäusehälfte (2A,2B) teilbar ist, dass eine erste und zweite Radiallagerhälfte (4A,4B) sowie eine erste und zweite Fanglagerhälfte (5A,5B) in der ersten bzw. zweiten Lagergehäusehälfte (2A,2B) aufgenommen sind und dass die jeweiligen Lagerhälften (4A,4B,5A,5B) beim Zusammenfügen der beiden Lagergehäusehälften (2A,2B) mittels formschlüssiger Verbindungselemente (26) automatisch zu dem magnetischen Radiallager (4) und dem Fanglager (5) passend zusammenfügbar sind.

4. Lagerbock nach Anspruch 3, **dadurch gekennzeichnet, dass** das magnetische Radiallager (4) eine erste Gruppe von Elektromagneten (41A) und eine zweite Gruppe von Elektromagneten (41B) aufweist, dass die erste Gruppe Teil der ersten Radiallagerhälfte (4A) und die zweite Gruppe Teil der zweiten Radiallagerhälfte (4B) ist und dass beide Gruppen über jeweils aus den Lagergehäusehälften (2A,2B) herausgeführte elektrische Zuleitungen mit jeweils einem selektiven Erregerstrom speisbar sind.

5. Lagerbock nach Anspruch 4, **dadurch gekennzeichnet, dass** an der ersten und zweiten Lagergehäusehälfte (2A,2B) jeweils ein elektrischer Anschluss (27A, 27B), insbesondere eine Buchse, zum Einspeisen des jeweiligen Erregerstroms für das magnetische Radiallager (4) angeordnet ist.

6. Lagerbock nach einem der Ansprüche 3 bis 5, **dadurch gekennzeichnet,**
- **dass** der Lagerbock ein im Lagergehäuse (2) aufgenommenes, axial zum magnetischen Radiallager (4) und zum Fanglager (5) angeordnetes magnetisches Axiallager (6) aufweist,
- **dass** das magnetische Axiallager (6) an derselben konstruktiven Schnittebene (E) teilbar ausgebildet ist,
- **dass** eine erste und zweite magnetische Axiallagerhälfte (6A,6B) in der ersten bzw. zweiten Lagergehäusehälfte (2A, 2B) aufgenommen sind,
- **dass** die Axiallagerhälften (6A,6B) derart axial im Lagergehäuse (2) angeordnet sind, dass diese einer fest mit der Rotorwelle (7) verbundenen, radial abstehenden Scheibe (72) gegenüberliegen, und
- **dass** die jeweiligen Lagerhälften (4A,4B,5A,5B,6A,6B) beim Zusammenfügen der beiden Lagergehäusehälften (2A,2B) mittels der formschlüssigen Verbindungselemente (26) automatisch zum magnetischen Radiallager (4), zum Fanglager (5) und zum magnetischen Axiallager (6) passend zusammenfügbar sind.

7. Lagerbock nach Anspruch 6, **dadurch gekennzeichnet, dass** die erste und zweite magnetische Axiallagerhälfte (6A,6B) jeweils zwei sich axial gegenüberliegende Gruppen von Elektromagneten (61A,62A;61B,62B) aufweist und dass die jeweiligen Gruppen derart axial zueinander beabstandet sind, dass die fest mit der Rotorwelle (7) verbundene, radial abstehende Scheibe (72) berührungslos dazwischenliegt.

8. Lagerbock nach Anspruch 6 oder 7, **dadurch gekennzeichnet, dass** die erste und zweite magnetische Axiallagerhälfte (6A,6B) über jeweils aus den jeweiligen Lagergehäusehälften (2A,2B) herausgeführte elektrische Zuleitungen mit jeweils einem weiteren selektiven Erregerstrom speisbar sind.

9. Lagerbock nach Anspruch 8, **dadurch gekennzeichnet, dass** an der ersten und zweiten Lagergehäusehälfte (2A,2B) jeweils ein weiterer elektrischer Anschluss (28A,28B), insbesondere eine Buchse, zum Einspeisen des jeweiligen weiteren Erregerstroms für das magnetische Axiallager (6) angeordnet ist.

10. Lagerbock nach einem der vorangegangenen Ansprüche, **dadurch gekennzeichnet, dass** der Lagerbock mit dem magnetischen Radiallager (4) und dem Fanglager (5) zur berührungslosen Lagerung und zum Auffangen der Rotorwelle (7) bis zu einer Achslast im Bereich von 3 bis 5 t ausgelegt ist.
